# EUROPÄISCHE PATENTSCHRIFT

(11) **EP 1 897 515 B1**
(45) Veröffentlichungstag und Bekanntmachung des Hinweises auf die Patenterteilung: **02.12.2009**
(21) Anmeldenummer: 07017205.1
(22) Anmeldetag: 03.09.2007
(51) Int. Cl.: A61C 15/04

(54) **Halter für Zahnseide**
Holder for dental floss
Support de fil dentaire

(30) Priorität: 05.09.2006 CH 14372006
(43) Veröffentlichungstag der Anmeldung: 12.03.2008
(73) Patentinhaber: Walker, Markus, 8055 Zürich (CH)
(72) Erfinder: Walker, Markus, 8055 Zürich (CH)
(74) Vertreter: Schaad, Balass, Menzl & Partner AG

(56) Entgegenhaltungen:
- DE-A1- 10 357 838
- US-A- 1 465 669
- US-A- 2 544 276
- US-A- 3 311 116
- US-A- 3 882 879
- US-A- 5 860 435

## Beschreibung

Die vorliegende Erfindung betrifft einen Halter für Zahnseide sowie ein Verfahren zum Betrieb dieses Zahnseidenhalters.

Es sind Zahnseidenhalter bekannt, die einen Griffteil und einen mit diesem verbundenen, gabelförmigen Halteteil mit zwei voneinander beabstandeten Haltearmen aufweisen. Der Zahnseidefaden wird zwischen den Haltearmen festgespannt (siehe z.B. DE-A-199 16 007).

Dokument US 3 311 116 offenbart einen Halter gemäß dem Oberbegriff des Anspruchs 1.

Der vorliegenden Erfindung liegt nun die Aufgabe zu Grunde, einen Halter für Zahnseide zu schaffen, der einfach in der Handhabung ist und ein einhändiges, bequemes Reinigen der Zahnzwischenräume erlaubt.

Diese Aufgabe wird erfindungsgemäss mit einem Halter mit den Merkmalen des Anspruches 1 gelöst.

Bei sich nicht in ihrer Klemmstellung befindlichen Klemmbacken lässt sich der Zahnseidefaden durch Ziehen leicht dem Zahnseidenspeicher entnehmen. Für die Benutzung wird der Zahnseidefaden zwischen den Klemmbacken festgeklemmt. Es braucht aber noch geeignete Mittel, um den Zahnseidefaden an seinem freien Ende festzuhalten. Zu diesem Zweck wird dieses freie Ende bei sich in ihrer Klemmstellung befindlichen Klemmbacken vorzugsweise um den Griffteil herum gewickelt. Dabei ist es von Vorteil, im Griffteil, d.h. in den Klemmbacken, eine sich in Umfangsrichtung der Klemmbacken verlaufende Ausnehmung vorzusehen, in die das aufgewickelte Ende des Zahnseidefadens eingelegt wird.

Andere bevorzugte Weiterausgestaltungen des erfindungsgemässen Halters sind in den übrigen abhängigen Ansprüchen definiert.

Das Verfahren zum Betrieb des erfindungsgemässen Halters bildet Gegenstand der Ansprüche 7-9.

Nachfolgend wird anhand der Zeichnungen ein Ausführungsbeispiel eines erfindungsgemässen Zahnseidenhalters beschrieben.

Es zeigen rein schematisch und in perspektivischen Ansichten:
- Fig. 1: die obere Hälfte eines erfindungsgemässen Zahnseidenhalters,
- Fig. 2: die untere Hälfte des Zahnseidenhalters,
- Fig. 3: in einer der Fig. 1 entsprechenden Darstellung einen Teil der oberen Halterhälfte,
- Fig. 4: in einer der Fig. 2 entsprechenden Darstellung einen Teil der unteren Halterhälfte,
- Fig. 5 & 6: den Halter mit geöffneten bzw. geschlossenen Klemmbacken, gesehen aus einer ersten Blickrichtung, und
- Fig. 7 & 8: den Halter mit geschlossenen bzw. geöffneten Klemmbacken, gesehen aus einer zweiten Blickrichtung.

Der in den Figuren gezeigte Zahnseidenhalter A weist einen Griffteil G und einen mit diesem verbundenen, gabelförmigen Halteteil H auf. Der Griffteil G wird durch zwei Klemmbacken 4, 4' gebildet, die auf noch zu beschreibende Weise gelenkig miteinander verbunden und relativ zueinander verschwenkbar sind. Jede Klemmbacke 4, 4' weist eine Klemmfläche 4a auf. Die beiden Klemmflächen 4a sind einander zugekehrt und dienen dazu, in einer Klemmstellung einen Zahnseidefaden 12 zwischen sich festzuklemmen. Die Klemmflächen 4a weisen eine gleithemmende Oberflächenstruktur auf. Beim gezeigten Ausführungsbeispiel wird diese gleithemmende Oberflächenstruktur dadurch erreicht, dass die Klemmflächen 4a gewellt oder gerillt sind. Doch können die Klemmflächen 4a auch auf andere Weise mit einer gleithemmenden Oberfläche versehen werden.

In den Klemmbacken 4, 4' ist eine sich in Umfangsrichtung der Klemmbacken 4, 4' erstreckende, rillenförmige Ausnehmung 16 ausgebildet. Diese Ausnehmung 16 dient auf noch zu beschreibende Weise zur Aufnahme des um den Griffteil G gewickelten Endes 12b des Zahnseidefadens 12. An der Klemmbacke 4' ist benachbart zur Ausnehmung 16 ein Umlenkvorsprung 15 vorgesehen, um den der Zahnseidefaden 12 herum geführt wird, wie das noch näher beschrieben werden wird.

Der gabelförmige Halteteil H weist zwei voneinander beabstandete Halteelemente 13, 13' auf, von denen das Halteelement 13 mit der Klemmbacke 4 und das Halteelement 13' mit der Klemmbacke 4' verbunden ist. Jedes Halteelement 13, 13' ist mit einem Durchlass 11 (Halteelement 13) bzw. 14 (Halteelement 13') für den Zahnseidefaden 12 versehen.

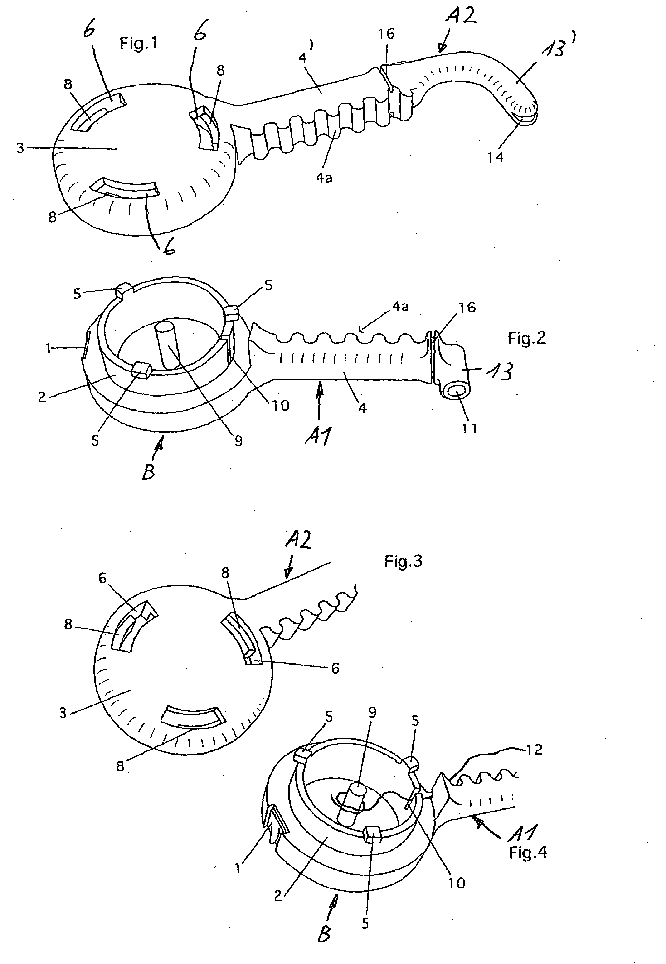

Mit dem Griffteil G ist weiter ein Behälter B verbunden, in dem ein in den Figuren nicht gezeigter Zahnseidenspender untergebracht ist. Beim gezeigten Ausführungsbeispiel ist dieser Zahnseidenspender eine Vorratsspule mit auf einen Spulenkern aufgewickeltem Zahnseidefaden 12. Der Behälter B weist eine Dose 2 und einen Deckel 3 auf, der drehbar und lösbar mit der Dose 2 verbunden ist. Die Dose 2 dient zur Aufnahme der (nicht gezeigten) Vorratsspule und ist mit einem Dorn 9 versehen, auf den der Spulenkern der Vorratsspule aufgesetzt wird. In der Wand der Dose 2 ist ein Schlitz 10 (siehe Figuren 2 und 4) vorhanden, durch den der Zahnseidefaden 12 aus dem Innern des Behälters B herausgeführt wird.

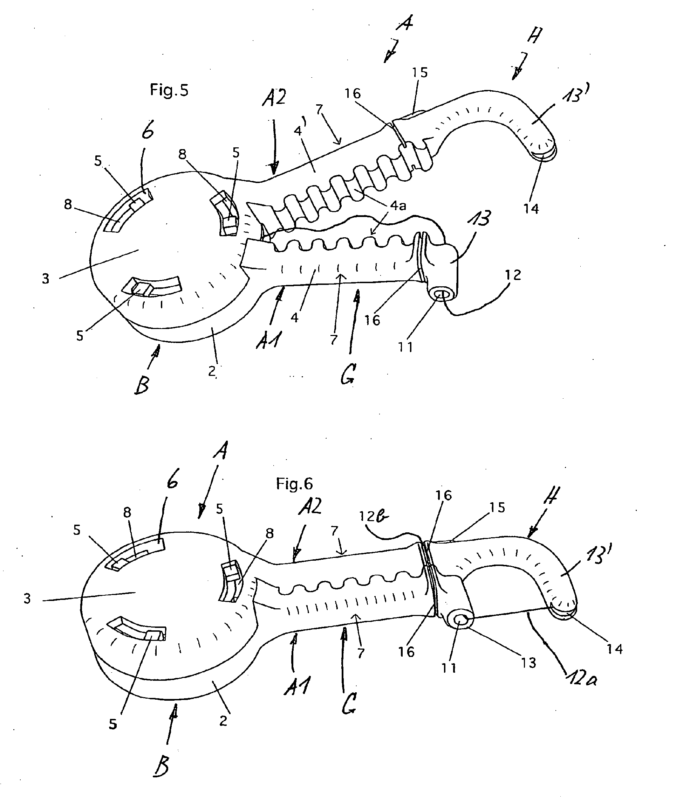

Die Dose 2 und der drehbar und wegnehmbar mit dieser verbundene Deckel 3 bilden die Gelenkverbindung für die Klemmbacken 4, 4' und sind in der Art eines Bajonettverschlusses miteinander verbunden. Zu diesem Zweck sind die Dose 2 mit abstehenden Nocken 5 und der Deckel 3 mit Aussparungen 6, in denen Verriegelungssegmente 8 angeordnet sind, versehen (siehe insbesondere die Figuren 1 und 2). Im zusammengebauten Zustand hintergreift jeder Nocken 5 an der Dose 2 ein Verriegelungssegment 8 am Deckel 3, wie das zum Beispiel die Figuren 5 bis 8 zeigen. Es versteht sich, dass die drehbare und lösbare Verbindung zwischen der Dose 2 und dem Deckel 3 auch auf andere geeignete Weise ausgebildet sein kann.

Am Behälter B, das heisst auf der Aussenseite der Dose 2, ist eine Schneidvorrichtung 1 zum Durchtrennen des Zahnseidefadens 12 vorhanden (siehe die Figuren 2 und 4). Die Schneidvorrichtung 1 kann beispielsweise gleich ausgebildet sein wie die Schneidvorrichtungen, wie sie bei handelsüblichen Zahnseideboxen verwendet werden.

Der vorstehend beschriebene Zahnseidehalter A besteht somit aus zwei Halterhälften A1 und A2. Die Halterhälfte A1 wird durch die Dose 2, die Klemmbacke 4 und den Halteteil 13 gebildet, während die Halterhälfte A2 durch den Deckel 3, die Klemmbacke 4' und den Halteteil 13' gebildet wird. Die Halterhälften A1 und A2 bestehen aus einem geeigneten Kunststoff.

Im Folgenden wird die Funktionsweise des beschriebenen Zahnseidenhalters A erläutert.

Bei von der Halterhälfte A1 abgehobener Halterhälfte A2 wird eine Vorratsspule in die Dose 2 eingelegt und der Anfang des Zahnseidefadens 12 in den Schlitz 10 in der Dosenwand eingelegt (siehe Figuren 1 und 2). Dann wird die obere Halterhälfte A2 so auf die untere Halterhälfte A1 aufgesetzt, dass die Nocken 5 an der Dose 2 in die Aussparungen 6 im Deckel 3 eingreifen können. Durch Drehen der Halterhälfte A2 bezüglich der anderen Halterhälfte A1 kommen die Nocken 5 in Eingriff mit den Verriegelungssegmenten 8. Dabei wird die Halterhälfte A2 nur soweit gedreht, dass die Klemmbacken 4, 4' noch eine Offenstellung einnehmen, wie das in Figur 5 dargestellt ist. Bei noch etwas geöffneten Klemmbacken 4, 4' wird der Zahnseidefaden 12 ein Stück weit aus dem Behälter B herausgezogen, zwischen die Klemmflächen 4a der Klemmbacken 4, 4' gelegt und durch den Durchlass 11 im Halteteil 13 gezogen (siehe Figur 5). Durch leichtes Ziehen am Zahnseidefaden 12 spannt sich dieser über die Klemmfläche 4a des unteren Halteteils A1. Nun werden die beiden Klemmbacken 4, 4' in Richtung der Pfeile 7 gedreht und in ihre in der Figur 6 gezeigte Klemmstellung gebracht. Dabei wird der Zahnseidefaden 12 zwischen den Klemmbacken 4, 4' eingeklemmt und festgehalten. Die Klemmbacken 4, 4' bleiben in ihrer Klemmstellung und der Zahnseidefaden 12 wird jetzt wiederum unter leichtem Zug von Halteelement 13 zum beabstandeten Halteelement 13' gezogen und in den nutförmigen Durchlass 14 im Halteteil 13' eingelegt. Anschliessend wird der Zahnseidefaden 12 um den Umlenkvorsprung 15 geführt und in die Ausnehmung 16 in den beiden Klemmbacken 4, 4' eingelegt. Das Ende 12b des Zahnseidefadens 12 wird nun mehrmals um die Klemmbacken 4, 4' herum gewickelt, wie das aus der Figur 6 ersichtlich ist. Durch dieses mehrmalige Herumwickeln des Fadenendes 12b um den Griffteil G herum werden die Klemmbacken 4, 4' in ihrer Klemmstellung fixiert. Ein allenfalls überschüssiger Teil des Zahnseidefadens 12 wird mittels der Schneidvorrichtung 1 weggeschnitten.

Wie die Figur 6 weiter zeigt, ist nun zwischen den Halteelementen 13 und 13' ein Abschnitt 12a des Zahnseidefadens 12 aufgespannt. Mittels dieses Zahnseidefadenabschnitts 12a werden nun auf an sich bekannte Weise die Zahnzwischenräume gereinigt.

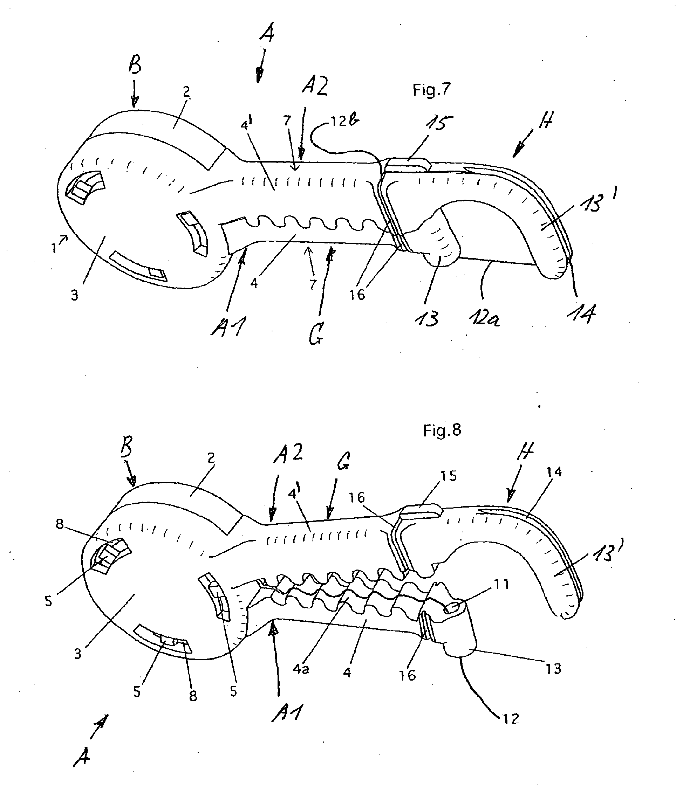

Will man den benutzen Zahnseidefadenabschnitt 12a ersetzen, so wird das Fadenende 12b vom Griffteil G abgewickelt, was zur Folge hat, dass sich die Klemmbacken 4, 4' voneinander lösen, das heisst etwas aus ihrer Klemmstellung heraus bewegt werden. Auf den Zahnseidefaden 12 wirkt nun keine Klemmkraft mehr, so dass Zahnseidefaden 12 nachgezogen werden kann. Der verbrauchte Abschnitt des Zahnseidefadens 12 wird mittels der Schneidvorrichtung 1 abgeschnitten. Dabei bleibt aber der Zahnseidefaden 12 in den Durchlass 11 des Halteelementes 13 eingefädelt, wie das die Figur 8 zeigt. Jetzt werden die Klemmbacken 4, 4' wieder in die Klemmstellung verbracht, worauf der Zahnseidefaden 12 unter leichtem Zug in den Durchlass 14 im Halteelement 13' eingelegt, um den Umlenkvorsprung 15 herumgeführt und mehrmals um die Klemmbacken 4, 4' herum gewickelt wird, wie das vorstehend anhand der Figuren 5 und 6 bereits beschrieben wurde. Der Zahnseidenhalter A ist wieder bereit (siehe Figur 8).

Beim beschriebenen Zahnseidenhalter A ist das Ersetzen eines verbrauchten Zahnseidefadenabschnittes 12a auf einfache Weise möglich. Eine leere Vorratsspule kann leicht aus dem Behälter B herausgenommen und durch eine neue Vorratsspule ersetzt werden. Hierzu ist es nur nötig, die beiden Halterhälften A1 und A2 soweit zu verdrehen, dass die Nocken 5 an der Dose 2 aus den Aussparungen 6 im Deckel 3 herausbewegt werden können. Das Spannen des zur Reinigung der Zahnzwischenräume verwendeten Zahnseidefadenabschnittes 12a erfolgt einerseits mittels der Klemmbacken 4, 4' und andererseits durch das Wickeln des Fadenendes 12b um den Griffteil G herum. Das um den Griffteil G herum gewickelte Fadenende 12b fixiert gleichzeitig die Klemmbacken 4, 4' in deren Klemmstellung.

## Patentansprüche

1. Halter für Zahnseide mit einem Griffteil (G), der zwei gelenkig miteinander verbundene, relativ zueinander verschwenkbare Klemmbacken (4, 4') aufweist, die in einer Klemmstellung einen Zahnseidefaden (12) zwischen sich festklemmen und bei einem Verschwenken aus der Klemmstellung den Zahnseidefaden (12) freigeben, mit einem gabelförmigen, mit dem Griffteil (G) verbundenen Halteteil (H) mit zwei voreinander beabstandeten Halteelementen (13, 13'), zwischen denen ein Abschnitt (12a) des Zahnseidefadens (12) aufspannbar ist und von denen jedes Halteelement (13, 13') am Ende einer der Klemmbacken (4, 4') anbeordnet ist, mit einem Zahnseidenspeicher, der in einem aus zwei voreinander trennbaren Teilen (2, 3) gebildeten Behälter (B) untergebracht ist und von dem der Zahnseidefaden (12) zwischen den Klemmbacken (4, 4') zum Halteteil (H) verläuft, und mit Mitteln zum lösbaren Festhalte des Zahnseidefadens (12) an seinem freien Ende (12b), **dadurch gekennzeichnet, dass** der Behälter (8) eine mit der einen Klemmbacke (4) verbundene Dose (2) zur Aufnahme des Zahnseidenspeichers und einen mit der andern Klemmbacke (4') verbundenen Deckel (3) aufweist, der drehbar und lösbar mit der Dose (2) verbunden ist und die Dose (2) und der Deckel (3) die Gelenkverbindung zwischen den beiden Klemmbacken (4, 4') bilden.

2. Halter nach Anspruch 1, **dadurch gekennzeichnet, dass** der Zahnseidenspeicher eine Vorratsspule ist.

3. Halter nach Anspruch 1 oder Anspruch 2, **dadurch gekennzeichnet, dass** die Klemmbacken (4, 4') sich gegenüberliegende, den Zahnseidefaden (12) zwischen sich aufnehmende Klemmflächen (4a) aufweisen, die mit einer gleithemmenden Oberflächenstruktur versehen sind.

4. Halter nach einem der Ansprüche 1 - 3, **dadurch gekennzeichnet, dass** die Mittel zum lösbaren Festhalten des freien Endes (12b) des Zahnseidefadens (12) eine in den Klemmbacken (4, 4a) ausgebildete, sich in Umfangsrichtung der Klemmbacken (4, 4') erstreckende, rillenförmige Ausnehmung (16) aufweisen, die zum Aufnehmen des um den Griffteil (G) gewickelten Endes (12b) des Zahnseidefadens (12) dient.

5. Halter nach einem der Ansprüche 1 - 4, **dadurch gekennzeichnet, dass** jedes der Halteelemente (13, 13') einen Durchlass (11, 14) für den Zahnseidefaden (12) aufweist.

6. Halter nach einem der Ansprüche 1 - 5, **gekennzeichnet durch** eine Schneidvorrichtung (1) zum Durchtrennen des Zahnseidefadens (12), die vorzugsweise am Behälter (B) angeordnet ist.

7. Verfahren zum Betrieb des Halters nach einem der Ansprüche 1 - 6, bei dem der Zahnseidefaden (12) vom Zahnseidenspeicher zwischen den sich in der Klemmstellung befindlichen Klemmbacken (4, 4') hindurch, dann durch einen Durchlass (11) im einen, ersten Halteelement (13) und anschliessend unter Zug durch einen Durchlass (14) im andern, zweiten Halteelement (13') geführt wird, **dadurch gekennzeichnet, dass** der Zahnseidefaden (12) anschliessend bei sich in ihrer Klemmstellung befindlichen Klemmbacken (4, 4') um den Griffteil (G) herum gewickelt und dabei in eine sich in Umfangsrichtung der Klemmbacken (4, 4') erstreckende, rillenförmige Ausnehmung (16) in den Klemmbacken (4, 4') eingelegt wird.

8. Verfahren nach Anspruch 7, **dadurch gekennzeichnet, dass** durch Herumwickeln des freien Endes (12b) des Zahnseidefadens (12) um den Griffteil (G) herum die Klemmbacken (4, 4') in ihrer Klemmstellung fixiert werden.

9. Verfahren nach Anspruch 7 oder Anspruch 8, **dadurch gekennzeichnet, dass** zum Nachziehen des Zahnseidefadens (12) zuerst das Ende (12b) des Zahnseidefadens (12) vom Griffteil (G) abgewickelt wird und die Klemmbacken (4, 4') aus der Klemmstellung heraus bewegt werden, worauf der Zahnseidefaden (12) aus dem Zahnseidenspeicher nachgezogen wird, die Klemmbacken (4, 4') wieder in die Klemmstellung bewegt werden und der Zahnseidefaden (12) um den Griffteil (G) herum gewickelt wird, wobei der vorher benutzte Zahnseidefadenabschnitt abgetrennt wird.

## Claims

1. Holder for dental floss, with a grip part (G) comprising two clamping jaws (4, 4') which are connected to each other in a hinged manner and are pivotable relative to each other and which, in a clamping position, firmly clamp dental floss (12) between them and, when pivoted out from the clamping position, release the dental floss (12), with a fork-shaped holding part (H) connected to the grip part (G) and halving two holding elements (13, 13') which are spaced apart from each other and between which a section (12a) of the dental floss (12) can be held taut, and of which each holding element (13, 13') is arranged at the end of one of the clamping jaws (4, 4'), with a dental floss storage unit which is accommodated in a container (B) formed by two parts (2, 3) separable from each other and from which the dental floss (12) runs between the clamping jaws (4, 4') to the holding part (H), and with means for releasably securing the dental floss (12) at its free end (12b), **characterized in that** the container (B) comprises a tin (2), which is connected to one clamping jaw (4) and receives the dental floss storage unit, and a lid (3), which is connected to the other clamping jaw (4') and is connected rotatably and releasably to the tin (2), and the tin (2) and the lid (3) form the hinge connection between the two clamping jaws (4, 4').

2. Holder according to Claim 1, **characterized in that** the dental floss storage unit is a supply reel.

3. Holder according to Claim 1 or Claim 2, **characterized in that** the clamping jaws (4, 4') have mutually opposite clamping surfaces (4a) which receive the dental floss (12) between them and which are provided with a surface structure that inhibits sliding.

4. Holder according to one of Claims 1-3, **characterized in that** the means for releasably securing the free end (12b) of the dental floss (12) comprise a groove-shaped recess (16) formed in the clamping jaws (4, 4') and extending in the circumferential direction of the clamping jaws (4, 4'), which recess (16) is used to receive the end (12b) of the dental floss (12) wound around the grip part (G).

5. Holder according to one of Claims 1-4, **characterized in that** each of the holding elements (13, 13') has a passage (11, 14) for the dental floss (12).

6. Holder according to one of Claims 1-5, **characterized by** a cutting device (1) for cutting the dental floss (12), which cutting device (1) is preferably arranged on the container (B).

7. Method for operating the holder according to one of Claims 1-6, in which method the dental floss (12) from the dental floss storage unit is guided between the clamping jaws (4, 4') located in the clamping position, then through a passage (11) in the first holding element (13), and then pulled with tensioning through a passage (14) in the other, second holding element (13'), **characterized in that** the dental floss (12) is then wound around the grip part (G), with the clamping jaws (4, 4') located in their clamping position, and in so doing is fitted into a groove-shaped recess (16) formed in the clamping jaws (4, 4') and extending in the circumferential direction of said clamping jaws (4, 4').

8. Method according to Claim 7, **characterized in that**, by winding the free end (12b) of the dental floss (12) around the grip part (G), the clamping jaws (4, 4') are fixed in their clamping position.

9. Method according to Claim 7 or Claim 8, **characterized in that**, in order to pull out more dental floss (12), the end (12b) of the dental floss (12) is first unwound from the grip part (G), and the clamping jaws (4, 4') are moved out from the clamping position, whereupon more dental floss (12) is pulled out of the dental floss storage unit, the clamping jaws (4, 4') are moved back to the clamping position, and the dental floss (12) is wound around the grip part (G), and the previously used section of dental floss is cut off.

## Revendications

1. Support de fil dentaire comprenant une partie de préhension (G) qui présente deux mâchoires de serrage (4, 4') connectées de manière articulée l'une à l'autre, pouvant pivoter l'une par rapport à l'autre, qui serrent entre elles, dans une position de serrage, un brin de fil dentaire (12) et qui libèrent le brin de fil dentaire (12) par pivotement hors de la position de serrage, avec une partie de retenue (H) en forme de fourche connectée à la partie de préhension (G), avec deux éléments de retenue (13, 13') espacés l'un de l'autre entre lesquels une portion (12a) du brin de fil dentaire (12) peut être tendue, et dont chacun des éléments de retenue (13, 13') est disposé à l'extrémité de l'une des mâchoires de serrage (4, 4'), avec une réserve de fil dentaire qui est montée dans un récipient (8) formé de deux parties séparables l'une de l'autre (2, 3), et depuis lequel le brin de fil dentaire (12) s'étend entre les mâchoires de serrage (4, 4') jusqu'à la partie de retenue (H), et avec des moyens pour la fixation desserrable du brin de fil dentaire (12) à son extrémité libre (12b), **caractérisé en ce que** le récipient (B) présente une boite (2) connectée à l'une des mâchoires de serrage (4), pour recevoir la réserve de fil dentaire et un couvercle (3) connecté à l'autre mâchoire de serrage (4'), qui est connecté de manière rotative et desserrable à la boîte (2), la boîte (2) et le couvercle (3) formant la connexion articulée entre les deux mâchoires de serrage (4, 4').

2. Support selon la revendication 1, **caractérisé en ce que** la réserve de fil dentaire est une bobine de réserve.

3. Support selon la revendication 1 ou la revendication 2, **caractérisé en ce que** les mâchoires de serrage (4, 4') présentent des surfaces de serrage (4a) opposées, recevant entre elles le brin de fil dentaire (12), qui sont pourvues d'une structure de surface antidérapante.

4. Support selon l'une quelconque des revendications 1 à 3, **caractérisé en ce que** les moyens pour la fixation desserrable de l'extrémité libre (12b) du brin de fil dentaire (12) présentent un évidement (16) en forme de gorge s'étendant dans la direction périphérique des mâchoires de serrage (4, 4'), réalisé dans les mâchoires de serrage (4, 4'), qui sert à recevoir l'extrémité (12b) du brin de fil dentaire (12) enroulée autour de la partie de préhension (G).

5. Support selon l'une quelconque des revendications 1 à 4, **caractérisé en ce que** chacun des éléments de retenue (13, 13') présente un passage (11, 14) pour le brin de fil dentaire (12).

6. Support selon l'une quelconque des revendications 1 à 5, **caractérisé par** un dispositif de sectionnement (1) pour sectionner le brin de fil dentaire (12), qui est disposé de préférence sur le récipient (B).

7. Procédé pour le fonctionnement du support selon l'une quelconque des revendications 1 à 6, dans lequel le brin de fil dentaire (12) est guidé depuis la réserve de fil dentaire entre les mâchoires de serrage (4, 4') se trouvant dans la position de serrage, puis à travers un passage (11) dans le premier élément de retenue (13) et ensuite sous tension à travers un passage (14) dans le deuxième élément de retenue (13'), **caractérisé en ce que** le brin de fil dentaire (12) est ensuite enroulé autour de la partie de préhension (G) lorsque les mâchoires de serrage (4, 4') se trouvent dans leur position de serrage, et en l'occurrence est introduit dans un évidement (16) en forme de gorge dans les mâchoires de serrage (4, 4'), s'étendant dans la direction périphérique des mâchoires de serrage (4, 4').

8. Procédé selon la revendication 7, **caractérisé en ce que** par enroulement de l'extrémité libre (12b) du brin de fil dentaire (12) autour de la partie de préhension (G), les mâchoires de serrage (4, 4') sont fixées dans leur position de serrage.

9. Procédé selon la revendication 7 ou la revendication 8, **caractérisé en ce que** pour extraire le brin de fil dentaire (12), d'abord l'extrémité (12b) du brin de fil dentaire (12) est déroulée de la partie de préhension (G) et les mâchoires de serrage (4, 4') sont déplacées hors de leur position de serrage, de sorte que le brin de fil dentaire (12) puisse être extrait de la réserve de fil dentaire, les mâchoires de serrage (4, 4') sont ensuite à nouveau déplacées dans la position de serrage et le brin de fil dentaire (12) est enroulé autour de la partie de préhension (G), la portion de brin de fil dentaire préalablement utilisée étant alors sectionnée.
